# EUROPÄISCHE PATENTANMELDUNG

(11) **EP 2 367 257 A2**
(43) Veröffentlichungstag der Anmeldung: **21.09.2011**
(21) Anmeldenummer: 10016135.5
(22) Anmeldetag: 28.12.2010
(51) Int. Cl.: H02J 7/00

(54) **Verfahren und Vorrichtung zum Laden eines Akkumulators in einem Hybridsystem aus Brennstoffzelle und Akkumulatoren**

(30) Priorität: 19.03.2010 DE 102010012089
(71) Anmelder: EnyMotion GmbH, 74078 Heilbronn (DE)
(72) Erfinder: Wieland, Steffan, Dr., 74078 Heilbronn (DE); Weeber, Bernd, 74193 Schwaigern (DE); Thunert, Fabian, 74248 Ellhofen (DE)
(74) Vertreter: Prinz & Partner

(57) **Zusammenfassung**

Bei einem Verfahren zum Laden wenigstens eines Akkumulators (1) in einem Hybridsystem, das einen Stromerzeuger (3), insbesondere eine Brennstoffzelle, und wenigstens zwei Akkumulatoren (1) aufweist, wird zunächst in einer ersten Ladephase der wenigstens eine Akkumulator (1) durch den Stromerzeuger (3) geladen. In einer zweiten Ladephase wird der wenigstens eine Akkumulator (1) durch wenigstens einen weiteren Akkumulator (1) des Hybridsystems geladen. Ein Umschalten von der ersten Ladephase in die zweite Ladephase erfolgt in Abhängigkeit bestimmter Parameter. Bei einer Vorrichtung zum Laden wenigstens eines Akkumulators (1) in einem Hybridsystem, das einen Stromerzeuger (3), insbesondere eine Brennstoffzelle, und mehrere Akkumulatoren (1) aufweist, ist vorgesehen, dass der wenigstens eine Akkumulator (1) gemäß einer ersten Verschaltung elektrisch an den Stromerzeuger (3) und gemäß einer zweiten Verschaltung an wenigstens einen weiteren Akkumulator (1) des Hybridsystems gekoppelt ist. Die Vorrichtung umfasst eine Steuerung (4), mit der zwischen den beiden Verschaltungen gewechselt werden kann. Das Verfahren bzw. die Vorrichtung ermöglicht eine nachhaltige Ladung der Akkumulatoren (1), insbesondere im Hinblick auf die Lebensdauer und die Erhaltung der Ladungskapazität der Akkumulatoren (1). Hierzu wird der Ladezyklus in zwei Phasen unterteilt, wobei in der ersten Phase die Ladung über den Stromerzeuger, insbesondere ein Brennstoffzellensystem, und in der zweiten Phase durch die gegenseitig Verschaltung der Akkumulatoren (1) erfolgt.

## Beschreibung

Die Erfindung betrifft ein Verfahren und eine Vorrichtung zum Laden wenigstens eines Akkumulators in einem Hybridsystem, das einen Stromerzeuger, insbesondere eine Brennstoffzelle, und mehrere Akkumulatoren aufweist.

Ein Hybridsystem mit einem Stromerzeuger und einem oder mehreren Akkumulatoren zur Energiezwischenspeicherung ermöglicht eine Bereitstellung von Energie aus dem bzw. den Akkumulatoren fernab von Steckdosen.

Die Speicherung der Energie auf einen Akkumulator muss gewissen Anforderungen standhalten, um eine hohe Lebensdauer und geringe Ladungskapazitätsverluste aufzuweisen und damit einen maximalen Nutzen zu gewährleisten. Diese geforderten Ladestrategien müssen vom Stromerzeugungssystem eingehalten werden. Da eine Steuerung der Leistung bei Stromerzeugern, insbesondere bei Brennstoffzellensystemen nicht bzw. nicht ohne Einbuße im Wirkungsgrad und/oder in der Lebensdauer möglich ist, ist_es notwendig einen Aufbau zu realisieren, mit dem eine nachhaltige Ladung bei gleichzeitigem optimalem Betrieb des Stromerzeugers möglich ist.

Bisherige Brennstoffzellensysteme mit Zwischenspeicherung auf Akkumulatoren nutzen zumeist die Speicherfähigkeit (Ladekapazität) nicht vollkommen aus und bewegen sich somit nur bei ca. 80 % der nutzbaren Energie. So ist beispielsweise aus der DE 10 2005 000 611 A1 ein Brennstoffzellensystem mit Zwischenspeicherung auf Sekundärbatterien bekannt. Hier wird jedoch nicht auf die Ladeanforderungen des Akkumulators eingegangen.

Aufgrund der ständig wachsenden Anforderungen an die Ladezyklen einerseits und nur begrenzter Regelungsmöglichkeiten der Brennstoffzelle andererseits können die Akkumulatoren ohne zusätzlichen Aufwand nicht optimal geladen werden. Dies resultiert in einer verkürzten Lebensdauer und in einer verminderten Leistungsabgabe der Akkumulatoren.

Des Weiteren ist aus der DE 10 2005 062 515 A1 eine Verschaltung von Akkumulatoren bekannt, welche jedoch nicht das Ziel einer optimalen Ladung der Energiezwischenspeicher anstrebt, sondern eine optimierte, an den Bedarf des Verbrauchers angepasste Leistungsbereitstellung.

Ferner ist aus DE 1 671 684 B1 eine Kopplung zwischen Akkumulatoren und Brennstoffzelle bekannt, bei der die Brennstoffzelle als Überwachungselement für die Gasung der Akkumulatoren eingesetzt wird. Dieser Aufbau dient zur nachhaltigen Ladung gemäß der geforderten Ladestrategie, jedoch wird kein Lösungsansatz für schwer bzw. nicht regelbare Stromerzeuger aufgezeigt.

In DE 196 52 173 B4 ist ein Verfahren zur gegenseitigen Überprüfung des "state of health" (SoH) von Akkumulatoren beschrieben. Durch Entladen eines Akkumulators wird der zweite geladen und somit eine gegenseitige Lande- und Entladebelastung durchgeführt, wodurch Aussagen über den jeweiligen Zustand eines Akkumulators getroffen werden können. Ein echter Ladevorgang der Akkumulatoren zur Bereitstellung von elektrischer Energie für einen Verbraucher ist hier nicht beschrieben.

Eine Darstellung einer nachhaltigen Ladestrategie bei Ladung mit einem bedingt regelbaren System, vorrangig Brennstoffzellensystem, erfolgt in den oben genannten Schriften nicht. Ein optimiertes Ladeverfahren ist im Zuge der optimalen Akkumulatornutzung und einer damit verbundenen Kostenreduktion aber unerlässlich.

Aufgabe der Erfindung ist es daher, die oben genannten Nachteile zu vermeiden und eine optimierte Ladestrategie für Akkumulatoren, insbesondere in Verbindung mit einem nur bedingt regelbaren Stromerzeugungssystem, wie einem Brerinstoffzellensystem, anzugeben.

Gelöst wird diese Aufgabe durch ein Verfahren mit den Merkmalen des Anspruchs 1 und eine Vorrichtung mit den Merkmalen des Anspruchs 10. Vorteilhafte Ausgestaltungen und Weiterbildungen des erfindungsgemäßen Verfahrens und der erfindungsgemäßen Vorrichtung sind in den Unteransprüchen angegeben.

Das erfindungsgemäße Verfahren dient zum Laden wenigstens eines Akkumulators in einem Hybridsystem, das einen Stromerzeuger, insbesondere eine Brennstoffzelle, und wenigstens zwei Akkumulatoren aufweist. Das Verfahren sieht vor, dass:
- in einer ersten Ladephase der wenigstens eine Akkumulator durch den Stromerzeuger geladen wird, und
- in einer zweiten Ladephase der wenigstens eine Akkumulator durch wenigstens einen weiteren Akkumulator des Hybridsystems geladen wird,
- wobei ein Umschalten von der ersten Ladephase in die zweite Ladephase in Abhängigkeit bestimmter Parameter erfolgt.

Der erfindungsgemäß vorgesehene Wechsel der Betriebsart von der ersten in die zweite Ladephase ermöglicht ein im Vergleich zum Stand der Technik deutlich verbessertes, nachhaltigeres Laden wenigstens eines Akkumulators in einem Hybridsystem. Gemäß der Erfindung kann der Akkumulator nach einem vorangegangenen Laden durch den Stromerzeuger zusätzlich durch einen oder mehrere weitere Akkumulatoren des Hybridsystems weiter geladen werden. Dadurch wird die Ladekapazität des Akkumulators bestmöglich ausgenutzt. Der oder die weiteren Akkumulatoren können hierzu vorab vom Stromerzeuger wenigstens soweit geladen werden, dass sie über ausreichend zwischengespeicherte Energie zum vollständigen Laden des voll zu ladenden Akkumulators haben.

Die Erfindung beruht auf der Erkenntnis, dass sich für die meisten verwendeten Akkumulatoren das sogenannte IU-Ladeverfahren (auch als CCCV für *constant current constant voltage* bezeichnet) anwenden lässt. Bei diesem Verfahren wird der Ladevorgang in eine Konstantstrom- und eine Konstantspannungsphase unterteilt. Die Ladung von Akkumulatoren mit einem Stromerzeuger, welcher nicht bzw. kaum regelbar ist (was insbesondere auf eine Brennstoffzelle zutrifft), ist auf eine Ladung im Konstantstrommodus beschränkt, da die Konstantspannungsphase eine Regelung der Leistung im Bereich von 10 - 100 % erfordert. Nach Beendigung der Konstantstromphase (erste Ladephase), die über eine Verschaltung des Akkumulators mit dem Stromerzeuger erfolgt, ist der Akkumulator zu ca. 80 % geladen. Eine Vollladung des Akkumulators wird gemäß der Erfindung durch Umschalten in eine daran anschließende Konstantspannungsphase (zweite Ladephase) mithilfe einer Stromzufuhr von dem bzw. den weiteren Akkumulatoren erreicht. Ein vollständiges Laden ist deshalb erstrebenswert, weil es höhere

Lebensdauern, geringere Schädigungen der Akkumulätoren und geringere Einbußen an Ladungskapazität pro Ladungszyklus ermöglicht.

Ein wesentlicher Vorteil der Erfindung ist, dass Akkumulatoren unterschiedlicher Art und Ladungskapazität verwendet werden können.

Das Umschalten zwischen den Ladephasen übernimmt bevorzugt eine elektronische Steuerung im Rahmen eines Energiemanagementsystems zur Überwachung und Regelung des gesamten Ladevorgangs.

Gemäß einer besonders einfachen Ladestrategie lädt der Stromerzeuger den wenigstens einen Akkumulator in der ersten Ladephase wenigstens zu einem Teil, vorzugsweise bis zu etwa 80 % von dessen Ladekapazität (was zumeist im Falle einer Brennstoffzelle als Stromerzeuger dem maximal Möglichen entspricht), bevor in die zweite Ladephase umgeschaltet wird.

Eine besondere Ausgestaltung des erfindungsgemäßen Verfahrens sieht vor, dass gleichzeitig zur Ladung des wenigstens einen Akkumulators eine Versorgung eines Verbrauchers mit Energie aus dem Stromerzeuger erfolgt. Damit ist es möglich, parallel zur Stromversorgung eines Verbrauchers einen oder mehrere Akkumulatoren des Hybridsystems aufzuladen.

Für den Fall, dass der Stromerzeuger des Hybridsystems in einer Anlaufphase zunächst selbst mit Energie versorgt werden muss, können gemäß einer Weiterbildung der Erfindung sowohl der Stromerzeuger als auch ein Verbraucher mit Energie aus wenigstens einem Teil der Akkumulatoren des Hybridsystems versorgt werden. Dies garantiert unter allen Umständen eine sofortige Stromversorgung eines Verbrauchers direkt nach dem Einschalten des Stromerzeugers.

Vorzugsweise überwacht die Steuerung im Rahmen eines Energiemanagementsystems den Ladevorgang des wenigstens einen Akkumulators und übernimmt alle oder einen Teil der Regelungsaufgaben des Stromerzeugers.

Insbesondere können als Parameter für ein Umschalten zwischen den Ladephasen Ladezustand und/oder Temperatur des wenigstens einen Akkumulators überwacht werden.

Im Falle einer Tiefentladung eines Akkumulators des Hybridsystems sieht eine Erweiterung des erfindungsgemäßen Verfahrens vor, diesen Akkumulator von wenigstens einem Teil nicht tiefentladener Akkumulatoren des Hybridsystems und/oder durch den Stromerzeuger mit geringer Stromstärke vorzuladen, bevor der Akkumulator dann in der ersten und/oder zweiten Ladephase weiter geladen wird.

Außerdem kann das erfindungsgemäße Verfahren bezüglich des Akkumulators welcher vollgeladen werden soll, variabel gehalten werden, d. h. es können wechselweise verschiedene Akkumulatoren des Hybridsystems in den erfindungsgemäß vorgesehenen zwei Phasen und damit vollständig aufgeladen werden. Eine wechselweise Vollladung verschiedener Akkumulatoren führt zu einer Erhöhung der Lebensdauer aller verbauten Akkumulatoren. Insbesondere können dadurch Schädigungen durch partielles Laden vermieden werden, welche vor allem bei gängigen Blei-Akkumulatoren auftreten können.

Gegenstand der Erfindung ist auch eine Vorrichtung zum Laden wenigstens eines Akkumulators in einem Hybridsystem, das einen Stromerzeuger, insbesondere eine Brennstoffzelle, und mehrere Akkumulatoren aufweist. Der wenigstens eine Akkumulator ist gemäß einer ersten Verschaltung elektrisch an den Stromerzeuger und gemäß einer zweiten Verschaltung an wenigstens einen weiteren Akkumulator des Hybridsystems gekoppelt. Die Vorrichtung umfasst eine Steuerung, mit der zwischen den beiden Verschaltungen gewechselt werden kann.

Eine solche Vorrichtung ermöglicht die Durchführung des erfindungsgemäßen Verfahrens mit den oben bereits erläuterten Vorteilen.

Damit gleichzeitig zur Ladung des wenigstens einen Akkumulators eine Versorgung eines Verbrauchers mit Energie aus dem Stromerzeuger erfolgen kann, ist vorteilhaft eine Verschaltung des Stromerzeugers, der Akkumulatoren und eines Verbrauchers vorgesehen, welche gleichzeitig zur Ladung des wenigstens einen Akkumulators eine Versorgung eines Verbrauchers mit Energie aus dem Stromerzeuger erlaubt.

Eine möglicherweise erforderliche anfängliche Energieversorgung des Stromerzeugers in einer Anlaufphase kann durch eine Verschaltung des Stromerzeugers, der Akkumulatoren und eines Verbrauchers bewerkstelligt werden, welche eine gleichzeitige Stromversorgung des Stromerzeugers und eines Verbrauchers mit gespeicherter Energie aus wenigstens einem Teil der Akkumulatoren des Hybridsystems erlaubt.

Die erfindungsgemäße Vorrichtung weist vorzugsweise ein Energiemanagementsystem zur Überwachung der Ladung des wenigstens einen Akkumulators und zur Durchführung von Regelungsaufgaben des Stromerzeügers auf.

Ein Ladezustandssensor und/oder Temperatursensor, der bzw. die in wenigstens einem Akkumulator zur Überwachung des Ladevorgangs angeordnet ist bzw. sind, liefern Messwerte, die für die Entscheidung über ein Umschalten zwischen den Ladephasen herangezogen werden können.

Gemäß einer bevorzugten Ausführungsform der erfindungsgemäßen Vorrichtung ist eine Verschaltung vorgesehen, bei der wenigstens zwei Akkumulatoren, welche sich in Ladekapazität und Art unterscheiden können, stromabwärts des Stromerzeugers verschaltet sind, und bei der eine erste elektrische Leitung stromabwärts der Akkumulatoren zur Eingangsseite des Stromerzeugers, sowie wenigstens eine zweite elektrische Leitung stromabwärts der Akkumulatoren und des Stromerzeugers für einen Verbraucher vorgesehen sind.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 ein Hybridsystem mit einer ersten Ausführungsform der erfindungsgemäßen Vorrichtung;
- Figur 2 ein Hybridsystem mit einer zweiten Ausführungsform der erfindungsgemäßen Vorrichtung; und
- Figur 3 eine für die erfindungsgemäße Vorrichtung bzw. für das erfindungsgemäße Verfahren typische Ladekurve.

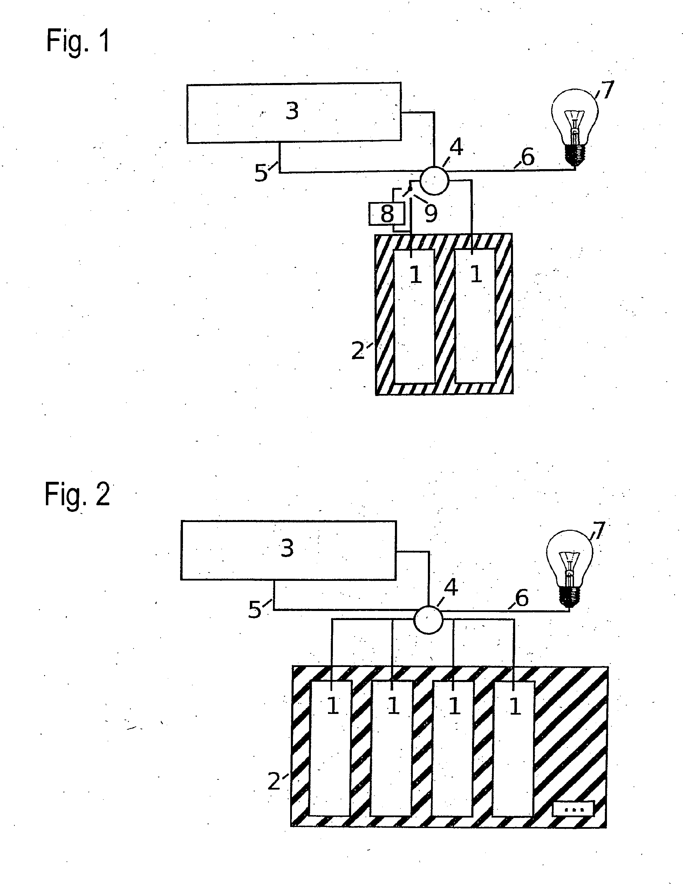

In Figur 1 ist schematisch ein möglicher Aufbau eines Hybridsystems zur Versorgung eines Verbrauchers 7 mit wenigstens einem Stromerzeuger 3, z.B. einer Brennstoffzelle, und einem "stromabwärts" des Stromerzeugers angeordneten Akkumulatorblock 2 dargestellt. Das Hybridsystem umfasst ferner eine Steuerung (oder Regelung) 4 mit einem Schalter 9 zur wahlweisen Verschaltung von bestimmten Leitungen sowie einen Spannungswandler 8.

Im Akkumulatorblock 2 sind mehrere Akkumulatoren 1 verschaltet, mindestens jedoch zwei, welche sich in Ladekapazität und Art unterscheiden können. Durch den Stromerzeuger 3 können in einer ersten Verschaltung die Akkumulatoren 1 geladen werden. Die Steuerung 4 überprüft dabei die einzelnen Zustände der Akkumulatoren 1 und sorgt dafür, dass diese in einer ersten Ladephase, der Konstantstromphase, bei definiertem Strom geladen werden.

Nach Ablauf dieser Ladephase schaltet die Steuerung 4 den Stromerzeuger 3 ab und schaltet über einen Spannungswandler 8 die Akkumulatoren 1 gemäß einer zweiten Verschaltung so zusammen, dass wenigstens einer der Akkumulatoren 1 bei definierter Spannung vollständig geladen wird. Für das Erreichen der notwendigen Spannung ist die Benutzung eines Spannungswandlers oder eine spezifische Systemverschaltung mehrerer Akkumulatoren 1 vorgesehen.

Nicht dargestellt sind Ladezustands- und/oder Temperatursensoren, die in einem oder mehreren Akkumulatoren 1 angeordnet sein können. Diese Sensoren liefern der Steuerung 4 Messwerte, anhand derer die Steuerung 4 entscheidet, wann von der ersten in die zweite Ladephase umgeschaltet wird. Die Sensoren bilden so zusammen mit der Steuerung 4 ein Energiemanagementsystem zur Überwachung der Ladung der Akkumulatoren 1 und zur Durchführung der Regelungsaufgaben des Stromerzeugers 3. Außerdem kann mit dem Energiemanagementsystem eine Funktionsanalyse durchgeführt werden.

Über die Steuerung 4 kann zusätzlich der Verbraucher 7 über eine separate Leitung 6 (stromabwärts der Akkumulatoren 1) mit elektrischer Energie aus dem Stromerzeuger 3 oder aus mindestens einem Akkumulator 1 versorgt werden. Das Hybridsystem ist zudem so ausgelegt, dass über eine weitere Zuleitung 5 (stromabwärts der Akkumulatoren 1) der Stromerzeuger 3 mit Energie versorgt wird. Dies stellt, falls notwendig, in einer Anlaufphase die zum Starten des Stromerzeugers 3 notwendige Energie bereit.

In Figur 2 ist schematisch ein weiterer möglicher Aufbau eines Hybridsystems dargestellt, der sich von dem in Figur 1 gezeigten Aufbau insbesondere dadurch unterscheidet, dass im Akkumulatorblock eine Vielzahl (mehr als zwei) Akkumulatoren 1 verschaltet und kein Spannungswandler vorgesehen bzw. notwendig ist. Die definierte Konstantspannung wird durch eine spezifische Verschaltung der anderen (momentan nicht aufzuladenden) Akkumulatoren 1 erreicht. Die Steuerung/Regelung 4 regelt in diesem Ausführungsfall die Ladespannung durch die Verschaltung der Akkumulatoren 1 und stellt dadurch sicher, dass der zu ladende Akkumulator 1 mit Konstantspannung versorgt wird. Die Funktionsweise entspricht ansonsten im Wesentlichen der des zuvor beschriebenen Aufbaus.

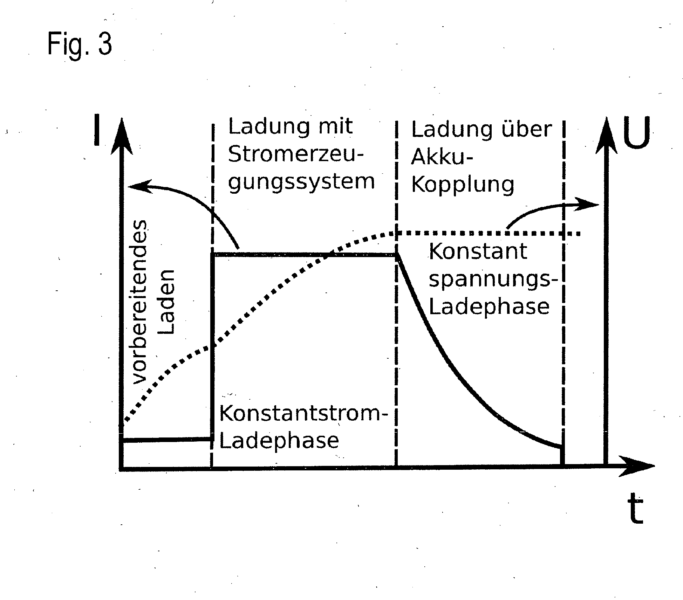

Figur 3 zeigt eine Ladekurve, wie sie für das Laden eines Akkumulators nach dem IU-Ladeverfahren mithilfe der in Figur 1 oder Figur 2 gezeigten Vorrichtung erreicht wird. Die Konstantstromphase wird mittels des Stromerzeugers 3 erreicht. Die Akkumulatoren 1 werden hier bis zu 80 % geladen. Die anschließende Konstantspannungsphase wird durch die von der Steuerung 4 herbeigeführte Kopplung von mindestens zwei Akkumulatoren 1 und gegebenenfalls einem Spannungswandler 8 ermöglicht. Die Steuerung 4 ermöglicht es auch, die Präferenz des vollständig zu ladenden Akkumulators 1 zu wechseln und somit die Lebenszeit aller Akkumulatoren 1 zu erhöhen.

Im Falle einer Tiefentladung eines Akkumulators 1 des Hybridsystems wird dieser Akkumulator 1 von wenigstens einem Teil nicht tiefentladener anderer Akkumulatoren 1 des Hybridsystems und/oder durch den Stromerzeugers 3 mit geringer Stromstärke vorgeladen, bevor der Akkumulator 1 dann in der ersten und/oder zweiten Ladephase weiter geladen wird.

## Patentansprüche

1. Verfahren zum Laden wenigstens eines Akkumulators (1) in einem Hybridsystem, das einen Stromerzeuger (3), insbesondere eine Brennstoffzelle, und wenigstens zwei Akkumulatoren (1) aufweist, **dadurch gekennzeichnet, dass**:
- in einer ersten Ladephase der wenigstens eine Akkumulator (1) durch den Stromerzeuger (3) geladen wird, und
- in einer zweiten Ladephase der wenigstens eine Akkumulator (1) durch wenigstens einen weiteren Akkumulator (1) des Hybridsystems geladen wird,
- wobei ein Umschalten von der ersten Ladephase in die zweite Ladephase in Abhängigkeit bestimmter Parameter erfolgt.

2. Verfahren nach Anspruch 1, **dadurch gekennzeichnet, dass** der Stromerzeuger (3) den wenigstens einen Akkumulator (1) in der ersten Ladephase wenigstens zu einem Teil, vorzugsweise bis zu 80 % von dessen Ladekapazität, lädt, ehe das Umschalten in die zweite Ladephase mittels einer elektronischen Steuerung (4) erfolgt.

3. Verfahren nach einem der vorhergehenden Ansprüche, **dadurch gekennzeichnet, dass** gleichzeitig zur Ladung des wenigstens einen Akkumulators (1) eine Versorgung eines Verbrauchers (7) mit Energie aus dem Stromerzeuger (3) erfolgt.

4. Verfahren nach einem der vorhergehenden Ansprüche, **dadurch gekennzeichnet, dass** in einer weiteren Phase sowohl der Stromerzeuger (3) als auch ein Verbraucher (7) mit Energie aus wenigstens einem Teil der Akkumulatoren (1) des Hybridsystems versorgt werden.

5. Verfahren nach einem der vorhergehenden Ansprüche soweit auf Anspruch 2 rückbezogen, **dadurch gekennzeichnet, dass** die Steuerung (4) im Rahmen eines Energiemanagementsystems den Ladevorgang und/oder -zustand des wenigstens einen Akkumulators (1) vorzugsweise mittels Ladezustands-und/oder Temperatursensoren überwacht und als Umschaltparameter zwischen den Ladephasen nutzt, sowie Regelungsaufgaben des Stromerzeugers (3) übernimmt.

6. Verfahren nach einem der vorhergehenden Ansprüche, **dadurch gekennzeichnet, dass** im Falle einer Tiefentladung eines Akkumulators (1) des Hybridsystems dieser Akkumulator (1) von wenigstens einem Teil nicht tiefentladener Akkumulatoren (1) des Hybridsystems und/oder durch den Stromerzeuger (3) mit geringer Stromstärke vorgeladen wird, bevor der Akkumulator (1) dann in der ersten und/oder zweiten Ladephase weiter geladen wird.

7. Verfahren nach einem der vorhergehenden Ansprüche, **dadurch gekennzeichnet, dass** wechselweise verschiedene Akkumulatoren (1) des Hybridsystems zweiphasig aufgeladen werden.

8. Vorrichtung zum Laden wenigstens eines Akkumulators (1) in einem Hybridsystem, das einen Stromerzeuger (3), insbesondere eine Brennstoffzelle, und mehrere Akkumulatoren (1) aufweist, **dadurch gekennzeichnet, dass** der wenigstens eine Akkumulator (1) gemäß einer ersten Verschaltung elektrisch an den Stromerzeuger (3) und gemäß einer zweiten Verschaltung an wenigstens einen weiteren Akkumulator (1) des Hybridsystems gekoppelt ist, wobei die Vorrichtung eine Steuerung (4) umfasst, mit der zwischen den beiden Verschaltungen gewechselt werden kann.

9. Vorrichtung nach Anspruch 8, **gekennzeichnet durch** eine Verschaltung des Stromerzeugers (3), der Akkumulatoren (1) und eines Verbrauchers (7), welche gleichzeitig zur Ladung des wenigstens einen Akkumulators (1) eine Versorgung eines Verbrauchers mit Energie aus dem Stromerzeuger (3) erlaubt.

10. Vorrichtung nach Anspruch 8 oder 9, **gekennzeichnet durch** eine Verschaltung des Stromerzeugers (3), der Akkumulatoren (1) und eines Verbrauchers, welche eine gleichzeitige Stromversorgung des Stromerzeugers (3) und eines Verbrauchers (7) mit Energie aus wenigstens einem Teil der Akkumulatoren (1) des Hybridsystems erlaubt.

11. Vorrichtung nach einem der Ansprüche 8 bis 10, **gekennzeichnet durch** ein Energiemanagementsystem zur Überwachung der Ladung des wenigstens einen Akkumulators (1), vorzugsweise **durch** Anordnung eines Ladezustand- und/oder eines Temperatursensors, und zur Durchführung von Regelungsaufgaben des Stromerzeugers (3).

12. Vorrichtung nach einem der Ansprüche 8 bis 11, **gekennzeichnet durch** eine Verschaltung, bei der wenigstens zwei Akkumulatoren (1), welche sich in Ladekapazität und Art unterscheiden können, stromabwärts des Stromerzeugers (3) verschaltet sind, und bei der eine erste elektrische Leitung (5) stromabwärts der Akkumulatoren (1) zur Eingangsseite des Stromerzeugers (3), sowie wenigstens eine zweite elektrische Leitung (6) stromabwärts der Akkumulatoren (1) und des Stromerzeugers (3) für einen Verbraucher (7) vorgesehen sind.
